# EUROPEAN PATENT APPLICATION

(11) **EP 0 968 986 A1**
(43) Date of publication of application: **05.01.2000**
(21) Application number: 97950402.4
(22) Date of filing: 25.12.1997
(51) Int. Cl.: C06D 5/00, C07F 1/08, C07F 3/02, C07F 3/04, C07F 5/06, C07F 15/02

(54) **SEMICARBAZIDE-METAL COMPLEXES AND GAS GENERATING AGENT FOR AIR BAGS**

(30) Priority: 26.12.1996 JP 34771596; 23.05.1997 JP 13335497
(71) Applicant: OTSUKA KAGAKU KABUSHIKI KAISHA, Osaka-shi Osaka-fu 540 (JP); NIPPON KOKI CO., LTD., Minato-ku, Tokyo 105 (JP)
(72) Inventor: YOSHIDA, Tadao, Saitama 343 (JP); CHIJIWA, Shiro, Osaka 534 (JP); SHIMIZU, Yasuo, Tokushima 770 (JP); HARA, Kazuo Mezon Do Furora 203, Tokushima 771-02 (JP); KAZUMI, Takashi, Fukushima 961 (JP); MATSUDA, Keisuke Taishinryo 78, Aza Namiki, Fukushima 969-03 (JP); FUKASE, Kenichi Taishinryo 78, Aza Namiki, Fukushima 969-03 (JP)
(74) Representative: Barz, Peter
(86) International application number: PCT/JP97/04839
(87) International publication number: WO 98/29362

(57) **Abstract**

An object of the invention is to provide an air bag gas generating composition which has the advantageous features of being capable of generating a remarkably large amount of gas and having low burning temperature. Another object is to provide a metal semicarbazide complex usable as a gas generating base for the above gas generating composition. The air bag gas generating composition of the invention comprises, as an active ingredient, at least one gas generating base selected from metal semicarbazide complexes. The metal semicarbazide complex is represented by the formula

[M(X)ₗ](NO₃)ₘ(OH)ₙ

wherein M represents a metal atom selected from Mg, Al, Ca, Mn, Cu, Zn or Fe; X represents H₂NNHCONH₂, l is an integer of 2 or 3, m is an integer of 1 to 3 and n is an integer of 0 to 2, with the proviso that m+n equals the ionic valence of the metal atom represented by M.

## Description

### Technical Field of the Invention

The present invention relates to a metal semicarbazide complex and an air bag gas generating composition.

### Background Art

Azide-based gas generating compositions containing sodium azide as a gas generating base are widely used as air bag gas generators, but have several drawbacks. For example, the azide-based gas generating compositions have a drawback of high shock ignitability and handling thereof requires constant and close care in the production process, etc. Furthermore, sodium azide is toxic, so that its handling requires protection equipment and special disposal facilities are necessary for the treatment of waste water generated in the process using sodium azide.

Today, most people recognize the importance of environmental protection and safety of operators and users. Under the circumstances, the azide-based gas generating compositions are not preferred due to the above mentioned drawbacks, and there is a strong demand for the development of an azide-free gas generator that will replace sodium azide.

Non-azide gas generating bases heretofore proposed are high nitrogen-containing organic compounds having an amide group, tetrazole ring or triazole ring, organic carboxylic acids, nitro compounds, high molecular compounds, and triaminoguanidine nitrate.

Examples of nitrogen-containing organic compounds having an amide group are azodicarbonamide of the chemical structural formula H₂NCON=NCONH₂ (Japanese Unexamined Patent Publications Nos. 32,689/1994, 32,690/1994 and 227,884/1994, WO 94/01381, etc.), biscarbamoylhydrazine of the chemical structural formula H₂NCONHNHCONH₂ (Japanese Unexamined Patent Publication No. 300,383/1995, DE-A-19,516,818), dicyandiamide of the chemical structural formula H₂NC(=NH)NHCN (U.S. Pat. No. 4,386,979), and carbohydrazide and its derivatives.

Examples of high nitrogen-containing organic compounds having a tetrazole ring or a triazole ring are a tetrazole derivative having a melting point of 90°C or higher and a decomposition point of 140°C or higher (U.S. Pat. No. 3,468,730), a transition metal salt of an aminotetrazole or an aminotriazole (U.S. Pat. No. 5,197,758), and a mixture of a tetrazole and/or triazole compound and an aqueous compound, e.g., aminoganidine nitrate or semicarbazide nitrate (Japanese Unexamined Patent Publication No. 257,986/1995).

Examples of organic carboxylic acids include carboxylic acid salts disclosed in U.S. Pat. No. 3,964,225. Nitro compounds are, for example, nitrobarbituric acid salts, nitroorotic acid salts, nitrouracil (Japanese Unexamined Patent Publication No. 302,388/1990). High molecular compounds include, for example, triacetate (Japanese Unexamined Patent Publication No. 74,165/1974).

Further, use of traminoguanizine nitrate as an air bag gas generating base is disclosed in Japanese Unexamined Patent Publication No. 254,977/1993, etc.

Recently, automobile manufacturers have been factory installing air bags as a standard feature in all types of new cars and are seeking further reduction of air bag inflator size. Accordingly, reduction in size of air bag gas generator vessels and combustion chambers, and formation of inflators using a thinner metal are needed. Under the circumstances, there is a demand for the development of an air bag gas generating composition which, as compared with the conventional non-azide air bag gas generating compositions, provides a clean gas, generates a large amount of gas per unit weight and has a low burning temperature.

As a gas generator meeting such demand, Japanese Unexamined Patent Publication No. 104,687/1997 recently proposed an air bag gas generating composition comprising tris(carbohydrazide-O,N)magnesium(II) nitrate complex as a gas generating base. However, according to the air bag gas generating composition disclosed therein, the residue (slug) created by combustion of tris(carbohydrazide-O,N)magnesium(II) nitrate complex may pass through the filter within an inflator and eventually go into an air bag to damage the air bag, whereby the user (passenger) will be at high risk of burn injury. The drawback that combustion residue of a gas generating base may pass through the filter in an inflator is not just a problem of the air bag gas generating composition disclosed in Japanese Unexamined Patent Publication No. 104,687/1997 but is a drawback common to conventional non-azide air bag gas generating compositions.

### Disclosure of the Invention

An object of the present invention is to provide an air bag gas generating composition which provides a clean gas, generates a large amount of gas per unit weight and has a low burning temperature, as compared with conventional non-azide air bag gas generating compositions.

Another object of the present invention is to provide an air bag gas generating composition which is capable of drastically reducing the percentage of combustion residue which passes through the filter within an inflator and goes into an air bag.

A further object of the invention is to provide a novel semicarbazide complex of metal, which is useful as a gas generating base for the above air bag gas generating composition.

The present invention provides an air bag gas generating composition comprising, as an active ingredient, at least one gas generating base selected from metal semicarbazide complexes (hereinafter referred to as "air bag gas generating composition A").

The present invention further provides an air bag gas generating composition comprising, as active ingredients, at least two gas generating bases selected from hydrazine derivative complexes of different metals (hereinafter referred to as "air bag gas generating composition B").

The present invention provides a metal semicarbazide complex represented by the formula

[M(X)ₗ](NO₃)ₘ(OH)ₙ (1)

wherein M represents a metal atom selected from Mg, Al, Ca, Mn, Cu, Zn or Fe; X represents H₂NNHCONH₂, l is an integer of 2 or 3, m is an integer of 1 to 3 and n is an integer of 0 to 2, with the proviso that m+n equals the ionic valence of the metal atom represented by M.

The metal semicarbazide complex of the invention is useful as a gas generating base for air bag gas generating compositions. The metal complex of the invention has the advantageous features of being capable of generating a remarkably large amount of gas and having low burning temperature. For example, the metal semi-carbazide complex of the invention generates a remarkably large amount of gas and has a burning temperature as low as about 1,800 to about 2,300 K. Further, the metal semicarbazide complex of the invention has the advantage of being highly heat stable (thermally durable). Since the automobile front portion equipped with air bag inflators reaches a very high temperature particularly in summer, it is preferable for an air bag generating composition to have high heat stability. Furthermore, the metal semicarbazide complex of the invention has low shock ignitability and is remarkably safe.

The air bag gas generating composition A of the invention has the following remarkable effects:
(1) The composition of the invention has the advantageous features of being capable of generating a remarkably large amount of gas and having low burning temperature. For example, the composition of the invention generates about 2.5 to about 3.0 moles or more of gas per unit weight (100 g) and has a burning temperature usually as low as about 1,800 to about 2,300 K or lower.
(2) The composition of the invention is less likely to cause a fire by ignition combustion upon external shock or due to its decomposition and has low toxicity, so that handling thereof in the production process involves very little risk.
(3) The composition of the invention is less likely to perforate or burn air bags or give burns to drivers and passengers, because it has a comparatively low burning temperature that is similar to gas generating compositions containing sodium azide as a gas generating base.
(4) The gas generated has a low CO concentration, because the composition of the invention comprises, as a gas generating base, a metal complex having low carbon content.
(5) The composition of the invention has the advantage of being highly heat stable (thermally durable). Since the automobile front portion equipped with air bag inflators reaches a very high temperature particularly in summer, it is preferable for an air bag generating composition to have high heat stability.
(6) The composition of the invention drastically reduces the percentage of combustion residue (slug) that passes through the filter within an inflator and goes into an air bag.

The air bag gas generating composition B of the invention has all the above effects (1) to (6) and is excellent in effect (6).

First, the air bag gas generating composition A of the invention is described.

The air bag gas generating composition A of the invention comprises, as a gas generating base, at least one member selected from metal semicarbazide complexes.

The metal of metal semicarbazide complexes is not limited but is usually one or more metals selected from elements of the 3rd to 4th periods in the periodic table. Among them, at least one member selected from Mg, Al, Ca, Mn, Cu, Zn and Fe is preferred.

Particularly preferable are metal semicarbazide complexes represented by the following formula (1):

[M(X)ₗ](NO₃)ₘ(OH)ₙ (1)

wherein M represents a metal atom selected from Mg, Al, Ca, Mn, Cu, Zn or Fe; X represents H₂NNHCONH₂, l is an integer of 2 or 3, m is an integer of 1 to 3 and n is an integer of 0 to 2, with the proviso that m+n equals the ionic valence of the metal atom represented by M.

Specific examples of preferable metal complexes of the invention are shown below.
[Mg(H₂NNHCONH₂)₃](NO₃)₂
[Al(H₂NNHCONH₂)₂](NO₃)(OH)₂
[Ca(H₂NNHCONH₂)₂](NO₃)₂
[Mn(H₂NNHCONH₂)₃](NO₃)₂
[Cu(H₂NNHCONH₂)₂](NO₃)₂
[Zn(H₂NNHCONH₂)₃](NO₃)₂
[Fe(H₂NNHCONH₂)₃](NO₃)₂

Of these, the following complexes are particularly preferable from the standpoints of thermal durability, safety and combustion performance.
[Mg(H₂NNHCONH₂)₃](NO₃)₂
[Mn(H₂NNHCONH₂)₃](NO₃)₂
[Zn(H₂NNHCONH₂)₃](NO₃)₂

The metal complex of the invention can be produced in the same manner as conventional methods. For example, metal nitrate and semicarbazide are reacted in a suitable solvent. More specifically, a solution of metal nitrate and a solution of semicarbazide are mixed, and the reaction mixture is cooled or a poor solvent is added, so that the desired metal complex is precipitated. Subsequently, fractionation is conducted to give a metal complex of formula (1).

Solvents usable for dissolving metal nitrate are, for example, water, methanol, ethanol or like lower alcohols, dimethylformamide and mixtures thereof. Solvents usable for dissolving semicarbazide are, for example, water, methanol, ethanol or like lower alcohols, acetonitrile, dioxane, dimethylformamide and mixtures thereof.

Examples of metal nitrates are copper(II) nitrate, zinc nitrate, calcium nitrate, aluminum nitrate, manganese(II) nitrate, magnesium nitrate and the like. The proportions of semicarbazide and metal nitrate are not limited and can be properly selected in accordance with the metal nitrate used. Usually about 1 to about 6 moles, preferably about 2 to about 4 moles, of semicarbazide is used per mole of metal nitrate.

The reaction of metal nitrate and semicarbazide is carried out usually at a temperature of about 10 to about 100°C, preferably about 20 to about 50°C. The reaction is usually completed in 4 hours, preferably in about 0.5 to about 1 hour. After completion of the reaction, the reaction mixture is cooled or a poor solvent (e.g., lower alcohol, acetonitrile or like nitrile) is added, so that the desired metal complex is precipitated. Subsequently, fractionation is conducted to give a metal complex of the invention. The metal complex obtained is purified by a conventional purification method.

The present invention provides an air bag gas generating composition consisting of one or more metal complexes, and also provides an air bag gas generating composition comprising at least one metal complex and at least one oxidizing agent.

The oxidizing agent to be used can be any oxidizer commonly used in the art and includes, for example, nitric acid salts, oxohalogen acid salts and peroxides. Among them, nitric acid salts are preferred.

Examples of nitric acid salts include a wide range of those known, and are alkali metal salts such as lithium nitrate, sodium nitrate and potassium nitrate, alkaline earth metal salts such as barium nitrate and strontium nitrate, ammonium salts such as ammonium nitrate, and so on. Among them, alkali metal salts and alkaline earth metal salts are preferred, and potassium nitrate and strontium nitrate are especially preferred.

Usable oxohalogen acid salts include a wide variety of those known, for example, perhalogenates, halogenates and the like. Examples of perhalogenates are alkali metal salts such as lithium perchlorate, potassium perchlorate, sodium perchlorate, lithium perbromate, potassium perbromate and sodium perbromate, alkaline earth metal salts such as barium perchlorate, calcium perchlorate, barium perbromate and calcium perbromate, ammonium salts such as ammonium perchlorate and ammonium perbromate, etc. Examples of useful halogenates are alkali metal salts such as lithium chlorate, potassium chlorate, sodium chlorate, lithium bromate, potassium bromate and sodium bromate, alkaline earth metal salts such as barium chlorate, calcium chlorate and calcium bromate, ammonium salts such as ammonium chlorate and ammonium bromate, etc. Among them, alkali metal perhalogenates and alkali metal halogenates are preferred.

Examples of peroxides include a wide variety of those known, for example, peroxides of alkali metals such as lithium peroxide, potassium peroxide and sodium peroxide, peroxides of alkaline earth metals such as calcium peroxide, strontium peroxide and barium peroxide.

The above oxidizing agents can be used either alone or in combination. Commercially available products of these oxidizing agents can be used as such, and the shape, particle size and the like are not limited and can be properly selected from a wide range in accordance with, for example, the amount of the oxidizing agent, the proportions to other components, the volume of the air bag and other conditions.

The oxidizing agent is used usually in a stoichiometric amount sufficient to completely oxidize and burn the gas generating base, calculated on the basis of the amount of oxygen. The amount of the oxidizing agent can be properly selected from a wide range, since the burning rate, burning temperature (gas temperature), composition of the combustion gas, etc. can be adjusted as desired by suitably changing the amounts of the gas generating base and the oxidizing agent. The oxidizing agent is used in an amount of about 10 to about 400 parts by weight, preferably about 30 to about 200 parts by weight, per 100 parts by weight of the gas generating base.

Secondly, the air bag gas generating composition B of the invention is described.

The air bag gas generating composition B according to the invention comprises, as gas generating bases, at least two members selected from hydrazine derivative complexes of different metals.

Examples of useful hydrazine derivatives are semicarbazide, carbohydrazide, hydrazine and formylhydrazine. Among them, semicarbazide and carbohydrazide are preferred and semicarbazide is particularly preferred.

The metals of hydrazine derivative complexes of different metals are not limited but are usually two or more metals selected from elements of the 3rd to 4th periods in the periodic table. Among them, at least two members selected from Mg, Al, Ca, Mn, Cu, Zn and Fe are preferred, and Mg and Mn are particularly preferred.

Further, it is particularly preferable to use, as gas generating bases, at least two hydrazine derivative complexes of the following formula (2):

[M(Y)ₗ](NO₃)ₘ(OH)ₙ (2)

wherein M represents a metal atom selected from Mg, Al, Ca, Mn, Cu, Zn or Fe; Y represents H₂NNHCONH₂ or H₂NNHCONHNH₂, l is an integer of 2 or 3, m is an integer of 1 to 3 and n is an integer of 0 to 2, with the proviso that m+n equals the ionic valence of the metal atom represented by M.

Specific examples of preferable metal complexes of the invention are shown below.
[Mg(H₂NNHCONH₂)₃](NO₃)₂
[Al(H₂NNHCONH₂)₂](NO₃)(OH)₂
[Ca(H₂NNHCONH₂)₂](NO₃)₂
[Mn(H₂NNHCONH₂)₃](NO₃)₂
[Cu(H₂NNHCONH₂)₂](NO₃)₂
[Zn(H₂NNHCONH₂)₃](NO₃)₂
[Fe(H₂NNHCONH₂)₃](NO₃)₂
[Mg(H₂NNHCONHNH₂)₃](NO₃)₂
[Al(H₂NNHCONHNH₂)₂](NO₃)(OH)₂
[Ca(H₂NNHCONHNH₂)₂](NO₃)₂
[Mn(H₂NNHCONHNH₂)₃](NO₃)₂
[Cu(H₂NNHCONHNH₂)₂](NO₃)₂
[Zn(H₂NNHCONHNH₂)₃](NO₃)₂
[Fe(H₂NNHCONHNH₂)₃](NO₃)₂

Of these, the following complexes are particularly preferable from the standpoints of thermal durability, safety and combustion performance.
[Mg(H₂NNHCONH₂)₃](NO₃)₂
[Mn(H₂NNHCONH₂)₃](NO₃)₂
[Mg(H₂NNHCONHNH₂)₃](NO₃)₂
[Mn(H₂NNHCONHNH₂)₃](NO₃)₂

The metal complex of the invention can be produced in the same manner as conventional methods. For example, metal nitrate and a hydrazine derivative are reacted in a suitable solvent. More specifically, a solution of metal nitrate and a solution of a hydrazine derivative are mixed, and the reaction mixture is cooled or a poor solvent is added, so that the desired metal complex is precipitated. Subsequently, fractionation is conducted to give a metal complex of formula (2).

Solvents usable for dissolving metal nitrate are, for example, water, methanol, ethanol, and like lower alcohols, dimethylformamide and mixtures thereof. Solvents usable for dissolving the hydrazine derivative are, for example, water, methanol, ethanol and like lower alcohols, acetonitrile, dioxane, dimethylformamide and mixtures thereof.

Examples of metal nitrates are copper(II) nitrate, zinc nitrate, calcium nitrate, aluminum nitrate, manganese(II) nitrate, magnesium nitrate and the like. The proportions of the hydrazine derivative and metal nitrate are not limited and can be properly selected in accordance with the metal nitrate used. Usually about 1 to about 6 moles, preferably about 2 to about 4 moles, of the hydrazine derivative is used per mole of metal nitrate.

The reaction of the hydrazine derivative and metal nitrate is carried out usually at a temperature of about 10 to about 100°C, preferably about 20 to about 50°C. The reaction is usually completed in 4 hours, preferably in about 0.5 to about 1 hour. After completion of the reaction, the reaction mixture is cooled or a poor solvent (e.g., lower alcohol, acetonitrile or like nitrile) is added, so that the desired metal complex is precipitated. Subsequently, fractionation is conducted to give a metal complex of the invention. The metal complex obtained is purified by a conventional purification method.

When at least two members selected from hydrazine derivative complexes of different metals are used as gas generating bases, they are used in the following proportions. The amount of hydrazine derivative complex(es) of one metal is usually about 10 to about 400 parts by weight, preferably about 50 to about 200 parts by weight, per 100 parts by weight of hydrazine derivative complex(es) of another metal.

The present invention provides an air bag gas generating composition consisting of two or more metal complexes, and also provides an air bag gas generating composition comprising at least two metal complexes and at least one oxidizing agent.

The oxidizing agent to be used can be any oxidizer commonly used in the art and includes, for example, nitric acid salts, oxohalogen acid salts and peroxides. Among them, nitric acid salts are preferred.

Examples of nitric acid salts include a wide range of those known, and are alkali metal salts such as lithium nitrate, sodium nitrate and potassium nitrate, alkaline earth metal salts such as barium nitrate and strontium nitrate, ammonium salts such as ammonium nitrate, and so on. Among them, alkali metal salts and alkaline earth metal salts are preferred, and potassium nitrate and strontium nitrate are especially preferred.

Usable oxohalogen acid salts include a wide variety of those known, for example, perhalogenates, halogenates and the like. Examples of perhalogenates are alkali metal salts such as lithium perchlorate, potassium perchlorate, sodium perchlorate, lithium perbromate, potassium perbromate and sodium perbromate, alkaline earth metal salts such as barium perchlorate, calcium perchlorate, barium perbromate and calcium perbromate, ammonium salts such as ammonium perchlorate and ammonium perbromate, etc. Examples of useful halogenates are alkali metal salts such as lithium chlorate, potassium chlorate, sodium chlorate, lithium bromate, potassium bromate and sodium bromate, alkaline earth metal salts such as barium chlorate, calcium chlorate and calcium bromate, ammonium salts such as ammonium chlorate and ammonium bromate, etc. Among them, alkali metal perhalogenates and alkali metal halogenates are preferred.

Examples of peroxides include a wide variety of those known, for example, peroxides of alkali metals such as lithium peroxide, potassium peroxide and sodium peroxide, peroxides of alkaline earth metals such as calcium peroxide, strontium peroxide and barium peroxide.

The above oxidizing agents can be used either alone or in combination. Commercially available products of these oxidizing agents can be used as such, and the shape, particle size and the like are not limited and can be properly selected from a wide range in accordance with, for example, the amount of the oxidizing agent, the proportions to other components, the volume of the air bag and other conditions.

The oxidizing agent is used usually in a stoichiometric amount sufficient to completely oxidize and burn the gas generating bases, calculated on the basis of the amount of oxygen. The amount of the oxidizing agent can be properly selected from a wide range, since the burning rate, burning temperature (gas temperature), composition of the combustion gas, etc. can be adjusted as desired by suitably changing the amounts of the gas generating bases and the oxidizing agent. The oxidizing agent is used in an amount of about 10 to about 400 parts by weight, preferably about 30 to about 200 parts by weight, per 100 parts by weight of the gas generating bases.

Preferably, the gas generating composition B of the invention comprises, as gas generating bases, at least two members selected from semicarbazide magnesium complex, semicarbazide manganese complex, carbohydrazide magnesium complex and carbohydrazide manganese complex, and an oxidizing agent.

In the above composition, the proportion of semicarbazide magnesium complex and/or carbohydrazide magnesium complex is preferably about 10 to about 400 parts per 100 parts by weight of semicarbazide manganese complex and/or carbohydrazide manganese complex, and the proportion of the oxidizing agent is preferably about 10 to about 400 parts by weight per 100 parts by weight of the gas generating bases.

Most preferably, the gas generating composition B of the invention comprises at least two gas generating bases of different metals selected from semicarbazide magnesium complex, semicarbazide manganese complex, carbohydrazide magnesium complex and carbohydrazide manganese complex, and strontium nitrate as an oxidizing agent.

In the above composition, the proportion of semicarbazide magnesium complex and/or carbohydrazide magnesium complex is preferably about 10 to about 400 parts per 100 parts by weight of semicarbazide manganese complex and/or carbohydrazide manganese complex, and the proportion of strontium nitrate is preferably about 10 to about 400 parts by weight per 100 parts by weight of the gas generating bases.

The air bag gas generating compositions A and B may contain at least one member selected from exhaust gas modifiers and binders, in addition to the gas generating bases and the oxidizing agent.

The exhaust gas modifier presumably has an activity chiefly to reduce the concentrations of toxic components such as CO, NOx and the like in the exhaust gas.

Usable exhaust gas modifiers include a wide range of those known in the art and are, for example, silicides of elements of the 4th to 6th periods in the periodic table.

Examples of silicides of elements of the 4th period are titanium silicide, chromium silicide and the like. Examples of silicides of elements of the 5th period are zirconium silicide, niobium silicide, molybdenum silicide and the like. Examples of silicides of elements of the 6th period are tantalum silicide, tungsten silicide and the like.

These exhaust gas modifiers can be used either alone or in combination. Commercially available products of these exhaust gas modifiers can be used as such. The particle size of the exhaust gas modifier is not limited and can be properly selected from a wide range in accordance with, for example, the amount of the exhaust gas modifier, the proportions to other components, the volume of the air bag and other conditions. The amount of the exhaust gas modifier to be used is not limited and can be properly selected from a wide range in accordance with, for example, the proportions to other components, the volume of the air bag and other conditions. The amount is about 0.1 to about 20 parts by weight, preferably about 1 to about 10 parts by weight, per 100 parts by weight of the total amount of the gas generating bases and the oxidizing agent.

The binder is used chiefly for molding the gas generating composition into tablets or the like and has further activities to reduce the burning temperature and to adjust the burning rate.

Useful binders include a wide range of those known in the art such as cellulose compounds, thermoplastic resins, organic high molecular compounds, inorganic binders, etc.

Examples of cellulose compounds are carboxymethyl cellulose, hydroxymethyl cellulose, ethers thereof, microcrystalline cellulose powders, etc. Among them, microcrystalline cellulose powders are preferable to use. For example, the powders available under a trade name "Abicel" (manufactured by Asahi Chemical Co., Ltd.) can be used.

Examples of thermoplastic resins are polypropylene carbonate, polyethylene/polyvinyl acetate copolymer, styrene/polyester copolymer, polyethyleneimide, polyvinyl ether, polyvinyl butyral, polyacrylamide, maleic acid polymer, hydroxy-terminated polybutadiene-based thermoplastic polyurethane, polybutadiene/acrylonitrile copolymer, carboxyl-terminated polybutadiene-based polyester, acrylate-terminated polybutadiene, ester of polybutadiene polycarboxylic acid with hydroxy-terminated polybutadiene, acrylic latex suspension, etc. Among them, preferred are polyethylene/polyvinyl acetate copolymer, polyvinyl ether, polyvinyl butyral and the like.

Useful organic high molecular compounds are, for example, soluble starch, polyvinyl alcohol, partially saponified products thereof, polyethylene glycol, polypropylene glycol, polyvinyl pyrrolidone, polysaccharide, sodium polyacrylate, ammonium polyacrylate, etc. Among them, soluble starch, polyvinyl alcohol and the like are preferred.

Useful inorganic binders are, for example, silica sol, alumina sol, zirconia sol, etc.

Among the above binders, cellulose compounds, thermoplastic resins and the like are preferred.

These binders can be used either alone or in combination. Commercially available products of these binders can be used as such. The particle size of the binder is not limited and can be properly selected from a wide range in accordance with, for example, the amount of the binder, the proportions to other components, the volume of the air bag and other conditions. The amount of the binder to be used is not limited and can be properly selected from a wide range in accordance with, for example, the proportions to other components, the volume of the air bag and other conditions. The amount is about 0.1 to about 20 parts by weight, preferably about 1 to about 10 parts by weight, per 100 parts by weight of the total amount of the gas generating bases and the oxidizing agent.

The air bag gas generating compositions A and B according to the invention may contain additives conventionally used for gas generating compositions. Examples of useful additives are carbonates and silicates of alkali metals such as sodium carbonate, potassium carbonate, sodium silicate, potassium silicate and the like, oxides of elements of the 2nd and 3rd periods of the periodic table such as bentonite, alumina, diatomaceous earth, silicon dioxide, boron oxide and the like. These additives have activities to further improve the properties of the gas generating composition of the invention and to facilitate molding the gas generating composition of the invention into tablets or the like. The amount of the additive to be used is not limited and can be properly selected from a wide range. The amount is about 0.01 to about 10 parts by weight, preferably about 0.05 to about 5 parts by weight, per 100 parts by weight of the total amount of the gas generating bases and the oxidizing agent.

The air bag gas generating compositions A and B according to the invention may contain gas generating bases and other additives conventionally used insofar as they do not adversely affect the contemplated result of the invention.

The air bag gas generating compositions A and B according to the invention are prepared by mixing the gas generating bases or the gas generating bases and the oxidizing agent, optionally with other components.

For use, the air bag gas generating compositions A and B according to the invention can be prepared into a suitable shape. For example, a suitable amount of a binder is mixed with the gas generating composition of the invention, and the mixture is tableted and optionally dried. For the preparation, a small amount of water, warm water or the like may be added to facilitate the operation or to assure increased safety in the operation. Useful binders are as mentioned above. The shape of the preparation is not critical and includes, for example, pellets, disks, balls, bars, hollow cylinders, confetti and tetrapods. It may be solid or porous (e.g., honeycomb-shaped). One or more projections may be formed on one or both surfaces of pellets or disks. The shape of projections is not limited specifically and includes, for example, cylinders, cones, polygonal cones, polygonal pillars, etc.

### Best Mode of Carrying Out the Invention

Given below are Reference Examples (Synthesis examples of metal complexes), Examples and Test Examples to illustrate the present invention.

### Reference Example 1 (Preparation of semicarbazide)

A 40.0 g (1.0 mole) quantity of sodium hydroxide was dissolved in 1000 ml of ethanol, and 111.5 g (1.0 mole) of semicarbazide hydrochloride was added thereto with stirring at room temperature. The mixture was heated to 60°C to undergo a reaction for 2 hours. After confirming that the reaction mixture became neutral, it was filtered while remaining hot. The filtrate was cooled to not higher than 10°C. The solid precipitated was separated by filtration, washed with a small amount of ethanol and dried, giving 63.8 g of white solid of semicarbazide (yield 85%).

| Elementary analysis (for H₂NNHCONH₂) | | | |
|---|---|---|---|
| | C | H | N |
| Calculated (%) | 15.99 | 6.71 | 55.95 |
| Found (%) | 15.68 | 6.50 | 56.00 |

IR (cm⁻¹): 551, 772, 937, 983, 1102, 1175, 1364, 1469, 1668, 3340, 3447
Weight loss initiation temperature (TG): 164°C

### Reference Example 2 (Preparation of semicarbazide zinc complex)

A 29.7 g (1.0 mole) quantity of zinc nitrate hexahydrate was dissolved in 50 ml of ethanol. A solution of 22.5 g (0.3 mole) of semicarbazide in 50 ml of water was added thereto with stirring at room temperature, so that some solid was precipitated. Further, the reaction mixture was cooled to 10°C and the solid precipitated was separated by filtration. The solid was washed with a small amount of ethanol and dried, giving 36.7 g of white solid.

The filtrate and washing liquid were combined and concentrated. After cooling, 20 ml of ethanol was added to give a suspension. White solid was separated by filtration, washed with a small amount of ethanol and dried, giving 3.7 g of solid. This solid was identical to the one obtained from the reaction mixture in weight loss initiation temperature.

The reaction product was [Zn(H₂NNHCONH₂)₃](NO₃)₂. The total amount yielded was 40.4 g. Yield 97%

| Elementary analysis (for [Zn(H₂NNHCONH₂)₃](NO₃)₂) | | | |
|---|---|---|---|
| | C | H | N |
| Calculated (%) | 8.68 | 3.59 | 37.14 |
| Found (%) | 8.94 | 3.57 | 37.48 |

IR (cm⁻¹): 544, 725, 824, 976, 1047, 1094, 1124, 1209, 1298, 1385, 1545, 1574, 1597, 1632, 1657, 2950, 3220, 3297, 3339, 3429, 3467
Weight loss initiation temperature (TG): 230°C

### Reference Example 3 (Preparation of semicarbazide zinc complex)

A 22.5 g (0.3 mole) quantity of semicarbazide was dissolved in 50 ml of water. A solution of 29.7 g (0.1 mole) of zinc nitrate hexahydrate in 50 ml of water was added thereto with stirring at room temperature, so that some solid was precipitated. Further, the reaction mixture was cooled to 10°C and the solid precipitated was separated by filtration. The solid was washed with a small amount of ethanol and dried, giving 32.0 g of white solid.

The filtrate and washing liquid were combined and concentrated. After cooling, 20 ml of ethanol was added to give a suspension. White solid was separated by filtration, washed with a small amount of ethanol and dried, giving 5.8 g of solid.

The compound obtained was identical to the compound obtained in Reference Example 2. The total amount yielded was 37.8 g. Yield 91%.

### Reference Example 4 (Preparation of semicarbazide magnesium complex)

A 22.5 g (0.3 mole) quantity of semicarbazide was dissolved in a mixed solvent of 50 ml of methanol and 20 ml of water. A solution of 25.6 g (0.1 mole) of magnesium nitrate hexahydrate in 30 ml of methanol was added thereto with stirring at room temperature. After stirring for 10 minutes, the solution was concentrated. After cooling, 50 ml of ethanol was added to give a suspension. The solid precipitated was separated by filtration, washed with a small amount of ethanol and dried, giving white solid.

The reaction product was [Mg(H₂NNHCONH₂)₃](NO₃)₂. The amount yielded was 34 g. Yield 91%.

| Elementary analysis (for [Mg(H₂NNHCONH₂)₃](NO₃)₂) | | | |
|---|---|---|---|
| | C | H | N |
| Calculated (%) | 9.65 | 4.05 | 41.25 |
| Found (%) | 9.92 | 3.97 | 41.27 |

IR (cm⁻¹): 550, 715, 824, 1110, 1210, 1385, 1549, 1656, 2428, 3336
Weight loss initiation temperature (TG): 217°C

### Reference Example 5 (Preparation of semicarbazide manganese complex)

A 28.7 g (0.1 mole) quantity of manganese(II) nitrate hexahydrate was dissolved in 100 ml of water. A solution of 22.5 g (0.3 mole) of semicarbazide in 50 ml of water was added thereto with stirring at room temperature. After stirring for 10 minutes, the solution was concentrated. After cooling, 50 ml of methanol was added to give a suspension. The solid was separated by filtration, washed with a small amount of methanol and dried, giving pale purple solid.

The reaction product was [Mn(H₂NNHCONH₂)₃](NO₃)₂. The amount yielded was 34 g. Yield 84%.

| Elementary analysis (for [Mn(H₂NNHCONH₂)₃](NO₃)₂) | | | |
|---|---|---|---|
| | C | H | N |
| Calculated (%) | 8.91 | 3.71 | 38.10 |
| Found (%) | 9.19 | 3.59 | 38.03 |

IR (cm⁻¹): 563, 715, 766, 833, 1086, 1121, 1198, 1385, 1547, 1590, 1655, 1634, 2428, 3174, 3250, 3445
Weight loss initiation temperature (TG): 210°C

### Reference Example 6 (Preparation of semicarbazide calcium complex)

A 15.0 g (0.2 mole) quantity of semicarbazide was dissolved in 50 ml of water. A solution of 23.6 g (0.1 mole) of calcium nitrate hexahydrate in 100 ml of water was added thereto with stirring at room temperature. After stirring for 30 minutes, the solution was concentrated. After cooling, 50 ml of methanol was added to give a suspension. The solid was separated by filtration, washed with a small amount of methanol and dried, giving white solid.

The reaction product was [Ca(H₂NNHCONH₂)₂](NO₃)₂. The amount yielded was 30.2 g. Yield 96%.

| Elementary analysis (for [Ca(H₂NNHCONH₂)₂](NO₃)₂) | | | |
|---|---|---|---|
| | C | H | N |
| Calculated (%) | 7.64 | 3.18 | 35.56 |
| Found (%) | 3.11 | 7.70 | 35.77 |

IR (cm⁻¹): 485, 703, 821, 1066, 1116, 1218, 1385, 1550, 1594, 1637, 1662, 3213, 3280, 3338, 3429, 3458
Weight loss initiation temperature (TG): 214°C

### Reference Example 7 (Preparation of semicarbazide aluminum complex)

A 15.0 g (0.2 mole) quantity of semicarbazide was dissolved in 1 ℓ of ethanol. A solution of 37.5 g (0.1 mole) of aluminum nitrate nonahydrate in 200 ml of ethanol was added slowly dropwise thereto with stirring at room temperature, so that white solid was precipitated. After stirring for 1 hour, the solid was separated by filtration, washed with ethanol and dried, giving white solid.

The reaction product was [Al(H₂NNHCONH₂)₂](NO₃)(OH)₂·H₂O. The amount yielded was 25.6 g. Yield 85%.

| Elementary analysis(for [Al(H₂NNHCONH₂)₂](NO₃)(OH)₂·H₂O) | | | |
|---|---|---|---|
| | C | H | N |
| Calculated (%) | 8.25 | 4.85 | 33.67 |
| Found (%) | 8.15 | 4.60 | 33.98 |

IR (cm⁻¹): 603, 742, 770, 825, 989, 1132, 1225, 1385, 1560, 1664, 3423
Weight loss initiation temperature (TG): 247°C

### Reference Example 8 (Preparation of semicarbazide iron(II) complex)

A 30.0 g (0.4 mole) quantity of semicarbazide was dissolved in 150 ml of water. A solution of 40.4 g (0.1 mole) of iron(III) nitrate nonahydrate in 120 ml of water was added slowly dropwise thereto with stirring at room temperature. After stirring for 1 hour, the insoluble matter was filtered off and separated by filtration. The filtrate was concentrated and cooled, followed by addition of 100 ml of ethanol to give a suspension. The solid was separated by filtration, washed with ethanol and dried, giving pale green ∼ white solid.

The reaction product was [Fe(H₂NNHCONH₂)₃](NO₃)₂. The amount yielded was 37.3 g. Yield 92%.

| Elementary analysis(for [Fe(H₂NNHCONH₂)₃](NO₃)₂ | | | |
|---|---|---|---|
| | C | H | N |
| Calculated (%) | 8.89 | 3.70 | 38.02 |
| Found (%) | 9.13 | 3.45 | 38.29 |

IR (cm⁻¹): 545, 717, 823, 1045, 1086, 1121, 1206, 1385, 1591, 1636, 1653, 2929, 3219, 3296, 3362, 3423, 3464
Weight loss initiation temperature (TG): 168°C

### Reference Example 9 (Preparation of semicarbazide copper(II) complex)

A 15.0 g (0.2 mole) quantity of semicarbazide was dissolved in 200 ml of water. A solution of 24.2 g (0.1 mole) of copper(II) nitrate trihydrate in 100 ml of water was added dropwise thereto with stirring at room temperature, so that some solid was precipitated. After stirring for 1 hour, the solution was cooled to 10°C and the solid precipitated was separated by filtration. The solid was washed with a small amount of cold water and ethanol and dried, giving 26.6 g of blue solid.

The filtrate and washing liquid were combined and concentrated. After cooling, 20 ml of ethanol was added to give a suspension. Blue solid was separated by filtration, washed with a small amount of ethanol and dried, giving 6.3 g of solid. This solid was identical to the one obtained from the reaction mixture in weight loss initiation temperature.

The reaction product was [Cu(H₂NNHCONH₂)₂](NO₃)₂. The total amount yielded was 32.9 g. Yield 97%.

| Elementary analysis (for [Cu(H₂NNHCONH₂)₂](NO₃)₂) | | | |
|---|---|---|---|
| | C | H | N |
| Calculated (%) | 7.11 | 2.99 | 33.83 |
| Found (%) | 7.16 | 2.91 | 33.76 |

IR (cm⁻¹): 523, 573, 825, 1051, 1107, 1186, 1281, 1385, 1537, 1574, 1632, 1644, 1678, 3251, 3321, 3421
Weight loss initiation temperature (TG): 166°C

### Example 1

A moist powder was prepared using 58 parts by weight of semicarbazide zinc complex, 34 parts by weight of potassium nitrate, 5 parts by weight of copper oxide and 3 parts by weight of crystalline cellulose (binder). The moist powder was granulated using a granulating machine. The resulting moist granules were dried and compressed using a cam-operated tableting machine to give pellets of a gas generating composition (4 mm in diameter, 1.5 mm in thickness and 0.05 g in weight).

### Example 2

Pellets of a gas generating composition were prepared in the same manner as in Example 1 with the exception that ferric oxide was used in place of copper oxide.

### Example 3

Pellets of a gas generating composition were prepared in the same manner as in Example 1 with the exception that manganese dioxide was used in place of copper oxide.

### Example 4

Using 60 parts by weight of semicarbazide zinc complex, 37.5 parts by weight of potassium nitrate and 2.5 parts by weight of crystalline cellulose, pellets of a gas generating composition of the invention were prepared in the same manner as in Example 1.

### Example 5

Using 60 parts by weight of semicarbazide magnesium complex, 37 parts by weight of potassium nitrate and 3 parts by weight of crystalline cellulose, pellets of a gas generating composition of the invention were prepared in the same manner as in Example 1.

### Example 6

Using 63 parts by weight of manganese semicarbazide complex, 34 parts by weight of potassium nitrate and 3 parts by weight of crystalline cellulose, pellets of a gas generating composition of the invention were prepared in the same manner as in Example 1.

### Example 7

Using 44 parts by weight of semicarbazide zinc complex, 53 parts by weight of calcium peroxide and 3 parts by weight of crystalline cellulose, pellets of a gas generating composition of the invention were prepared in the same manner as in Example 1.

### Example 8

Using 61.8 parts by weight of semicarbazide zinc complex, 30.2 parts by weight of strontium nitrate, 5 parts by weight of manganese dioxide and 3 parts by weight of crystalline cellulose, pellets of a gas generating composition of the invention were prepared in the same manner as in Example 1.

### Example 9

Using 61.8 parts by weight of semicarbazide magnesium complex, 30.2 parts by weight of strontium nitrate, 5 parts by weight of manganese dioxide and 3 parts by weight of crystalline cellulose, pellets of a gas generating composition of the invention were prepared in the same manner as in Example 1.

### Test Example 1

The pellet samples of gas generating compositions obtained in Examples 1 to 9 were individually put into combustion chambers of inflators having a gas outlet 4 mm in diameter and loaded with 2.0 g of boron/potassium nitrate as a transfer charge. An aluminum tape 0.15 mm in thickness was attached to the gas outlet to maintain the pressure. Each inflator was set in a 60-liter tank and actuated by applying current to a squib, thereby igniting the pellet sample. The pressure in the combustion chamber and the pressure in the 60-liter tank were measured. After burning, the gas in the 60-liter tank was collected into a 10-liter tedlar bag and checked for the CO and NOx concentrations using a detector tube. Table 1 shows the results.

**Table 1**

| | Example | | | | | | | | |
|---|---|---|---|---|---|---|---|---|---|
| | 1 | 2 | 3 | 4 | 5 | 6 | 7 | 8 | 9 |
| Amount of pellets (g) | 55 | 55 | 55 | 55 | 55 | 55 | 55 | 55 | 55 |
| Maximum pressure in combustion chamber (MPa) | 19.5 | 23.2 | 20.7 | 35.0 | 24.4 | 23.0 | 15.8 | 26.5 | 19.9 |
| Time in which the internal pressure of the combustion chamber reaches the maximum | 4.2 | 4.3 | 5.4 | 4.2 | 4.3 | 4.4 | 4.2 | 4.0 | 4.0 |
| Maximum pressure in tank (MPa) | 250 | 195 | 163 | 280 | 187 | 206 | 157 | 207 | 177 |
| Time in which the internal pressure of the tank reaches the maximum | 115 | 110 | 57 | 44 | 36.5 | 134 | 147 | 39 | 191 |
| CO concentration (%) | 1.3 | 1.1 | 0.7 | 1.2 | 1.3 | 1.2 | 1.0 | 1.8 | 2.0 |
| NOx concentration (ppm) | 300 | 400 | 20 | 500 | 250 | 600 | 150 | 800 | 600 |

In Table 1, the "time in which the internal pressure of the combustion chamber reaches the maximum" and "time in which the internal pressure of the tank reaches the maximum" are indicated by "ms".

### Test Example 2

The pellets obtained in Examples 4 to 6 (30 mm x 5 mm x 5 mm) were tested for burning velocity. Their linear burning velocity was measured under a pressure of 8 MPa (nitrogen gas) at 22°C, using a chimney-type strand burner. Table 2 shows the results.

**Table 2**

| | Linear burning velocity (mm/sec) [at 8 MPa] |
|---|---|
| Example 4 | 6.1 |
| Example 5 | 6.9 |
| Example 6 | 5.3 |

### Example 10

Using 31.5 parts by weight of semicarbazide zinc complex, 31.5 parts by weight of semicarbazide manganese complex and 34 parts by weight of potassium nitrate and 3 parts of crystalline cellulose, pellets of a gas generating composition of the invention were prepared in the same manner as in Example 1.

### Example 11

Using 43 parts by weight of semicarbazide manganese complex, 20 parts by weight of semicarbazide magnesium complex and 34 parts by weight of potassium nitrate and 3 parts of crystalline cellulose, pellets of a gas generating composition of the invention were prepared in the same manner as in Example 1.

### Example 12

Using 31 parts by weight of semicarbazide zinc complex, 31 parts by weight of semicarbazide magnesium complex and 35 parts by weight of potassium nitrate and 3 parts of crystalline cellulose, pellets of a gas generating composition of the invention were prepared in the same manner as in Example 1.

### Example 13

Using 42 parts by weight of semicarbazide manganese complex, 20 parts by weight of semicarbazide magnesium complex, 35 parts by weight of strontium nitrate and 3 parts by weight of crystalline cellulose, pellets of a gas generating composition of the invention were prepared in the same manner as in Example 1.

### Example 14

Using 62 parts by weight of semicarbazide magnesium complex, 35 parts by weight of strontium nitrate and 3 parts by weight of crystalline cellulose, pellets of a gas generating composition of the invention were prepared in the same manner as in Example 1.

### Example 15

Using 62 parts by weight of semicarbazide manganese complex, 35 parts by weight of strontium nitrate and 3 parts by weight of crystalline cellulose, pellets of a gas generating composition of the invention were prepared in the same manner as in Example 1.

### Example 16

Using 42 parts by weight of carbohydrazide manganese complex, 20 parts by weight of carbohydrazide magnesium complex, 35 parts by weight of strontium nitrate and 3 parts by weight of crystalline cellulose, pellets of a gas generating composition of the invention were prepared in the same manner as in Example 1.

### Test Example 3

The pellet samples of gas generating compositions obtained in Examples 4 to 6 and Examples 10 to 16 (45 g) were individually put into combustion chambers of inflators having a gas outlet 4 mm in diameter and loaded with 3.0 g of boron/potassium nitrate as a transfer charge. An aluminum tape 0.15 mm in thickness was attached to the gas outlet to maintain the pressure. Each inflator was set in a 60-liter tank and actuated by applying current to a squib, thereby igniting the pellet sample. The pressure in the combustion chamber was measured. After burning, the amount of residue within the inflator was measured. Table 3 shows the results.

**Table 3**

| | Example | | | | | | | | | |
|---|---|---|---|---|---|---|---|---|---|---|
| | 4 | 5 | 6 | 10 | 11 | 12 | 13 | 14 | 15 | 16 |
| Amount of pellets (g) | 45.0 | 45.0 | 45.0 | 45.0 | 45.0 | 45.0 | 45.0 | 45.0 | 45.0 | 45.0 |
| Maximum pressure in combustion chamber (MPa) | 35.3 | 24.4 | 23.0 | 22.6 | 21.7 | 21.1 | 21.1 | 23.0 | 22.5 | 26.1 |
| Time in which the internal pressure of the combustion chamber reaches the maximum | 4.2 | 4.3 | 4.4 | 5.1 | 3.6 | 4.5 | 4.5 | 4.4 | 4.4 | 3.7 |
| Residue remaining in the inflator (%) | 56.2 | 52.4 | 58.8 | 53.5 | 75.3 | 51.4 | 77.0 | 55.5 | 59.7 | 72.8 |

In Table 3, the "time in which the internal pressure of the combustion chamber reaches the maximum" is indicated by "ms".

## Claims

1. A metal semicarbazide complex represented by the formula
[M(X)ₗ](NO₃)ₘ(OH)ₙ
wherein M represents a metal atom selected from Mg, Al, Ca, Mn, Cu, Zn or Fe; X represents H₂NNHCONH₂, l is an integer of 2 or 3, m is an integer of 1 to 3 and n is an integer of 0 to 2, with the proviso that m+n equals the ionic valence of the metal atom represented by M.

2. An air bag gas generating composition comprising, as an active ingredient, at least one gas generating base selected from metal semicarbazide complexes.

3. An air bag gas generating composition comprising, as active ingredients, at least one gas generating base selected from metal semicarbazide complexes, and at least one oxidizing agent selected from oxohalogen acid salts or nitric acid salts.

4. The air bag gas generating composition according to claim 2 or 3, wherein the metal of metal semicarbazide complexes is at least one member selected from elements of the 3rd to 4th periods in the periodic table.

5. The air bag gas generating composition according to claim 4, wherein the metal of metal semicarbazide complexes is at least one member selected from Mg, Al, Ca, Mn, Cu, Zn and Fe.

6. The air bag gas generating composition according to claim 5 wherein the metal semicarbazide complex is represented by the formula
[M(X)ₗ](NO₃)ₘ(OH)ₙ
wherein M represents a metal atom selected from Mg, Al, Ca, Mn, Cu, Zn or Fe; X represents H₂NNHCONH₂, l is an integer of 2 or 3, m is an integer of 1 to 3 and n is an integer of 0 to 2, with the proviso that m+n equals the ionic valence of the metal atom represented by M.

7. An air bag gas generating composition comprising, as active ingredients, at least two gas generating bases selected from hydrazine derivative complexes of different metals.

8. An air bag gas generating composition comprising, as active ingredients, at least two gas generating bases selected from hydrazine derivative complexes of different metals and at least one oxidizing agent selected from oxohalogen acid salts or nitric acid salts.

9. The air bag gas generating composition according to claim 7 or 8, wherein the hydrazine derivative is semicarbazide and/or carbohydrazide.

10. The air bag gas generating composition according to any one of claims 7 to 9, wherein the metals of hydrazine derivative complexes of different metals are magnesium and manganese.

11. The air bag gas generating composition according to any one of claims 7 to 10, wherein the oxidizing agent is a nitric acid salt.

12. The air bag gas generating composition according to claim 11 wherein the nitric acid salt is strontium nitrate.

13. The air bag gas generating composition according to claim 9, wherein the metals of hydrazine derivative complexes of different metals are magnesium and manganese and the oxidizing agent is strontium nitrate.
